# EUROPEAN PATENT SPECIFICATION

(11) **EP 4 328 340 B1**
(45) Date of publication and mention of the grant of the patent: **12.11.2025**
(21) Application number: 22791494.2
(22) Date of filing: 28.03.2022
(51) Int. Cl.: C22B 5/10, C22B 7/00, C22B 23/02, H01M 10/54, C22B 23/00, C22B 26/12

(54) **METHOD FOR PRODUCING VALUABLE METAL**
VERFAHREN ZUR HERSTELLUNG VON WERTMETALL
PROCÉDÉ DE PRODUCTION D'UN MÉTAL DE VALEUR

(30) Priority: 23.04.2021 JP 2021073230; 06.10.2021 JP 2021164950
(43) Date of publication of application: 28.02.2024
(73) Proprietor: SUMITOMO METAL MINING CO., LTD., Tokyo 105-8716 (JP)
(72) Inventor: YAMASHITA, Yu, Niihama-shi, Ehime 792-0002 (JP); NAGAKURA, Toshihiko, Niihama-shi, Ehime 792-0002 (JP); YABE, Takayuki, Niihama-shi, Ehime 792-0002 (JP)
(74) Representative: Jones, Nicholas Andrew
(86) International application number: PCT/JP2022/014904
(87) International publication number: WO 2022/224719

(56) References cited:
- WO-A1-2016/023778
- WO-A1-2020/013294
- WO-A1-2020/104164
- JP-A- 2010 242 128
- JP-A- 2012 251 220
- JP-A- 2017 526 820
- JP-A- 2019 135 321
- JP-A- 2021 113 345
- JP-A- 2021 161 453

## Description

### TECHNICAL FIELD

The present invention relates to a method for producing a valuable metal from a raw material comprising phosphorus, and oxides of nickel and cobalt, such as a discarded lithium ion battery.

### BACKGROUND ART

Recently, lithium ion batteries have become popular as secondary batteries which are light and have large output. As a lithium ion battery, a battery has been known that includes an outer case made of a metal such as aluminum or iron, in which a negative electrode material including a negative electrode current collector having a copper foil and a negative electrode active material, such as graphite, bonded to the current collector; a positive electrode material including a positive electrode current collector having an aluminum foil and a positive electrode active material, such as lithium nickelate or lithium cobaltate, bonded to the current collector; a separator including, for example, a porous organic resin film made of polypropylene; and an electrolytic solution containing an electrolyte such as lithium hexafluorophosphate (LiPF₆), are sealed.

One of the main applications of lithium ion batteries includes hybrid cars and electric vehicles, and it is expected that a large amount of lithium ion batteries are likely to be discarded in the future along with lifecycles of the vehicles. Many proposals have been made to reuse, as a resource, such used batteries and defective lithium ion batteries occurring in the production process (hereinafter such batteries will be collectively referred to as "discarded lithium ion batteries"). For example, as a recycling method of discarded lithium ion batteries, a pyrometallurgical process in which the entire amount of discarded lithium ion batteries is melted in a high-temperature furnace has been proposed.

A discarded lithium ion battery includes, in addition to valuable metals such as nickel (Ni), cobalt (Co), and copper (Cu), impurity components such as carbon (C), aluminum (Al), fluorine (F), and phosphorus (P). Therefore, in recovering the valuable metals from discarded lithium ion batteries, it is necessary to remove these impurity components.

In a pyrometallurgical process, a raw material including discarded lithium ion batteries is melted at a temperature of about 1500°C, and then a process of separating the resulting melt into a metal and a slag is performed. In this process, valuable substances contained in the raw material can be reduced and recovered as metals, and impurities can be oxidized, separated into the slag and removed.

However, if the degree of reduction is adjusted too high to increase recovery rates of valuable metals such as cobalt, for example, of impurities, phosphorus is not oxidatively removed and remains in the metals. On the other hand, if the degree of reduction is adjusted too low, even the valuable metals are oxidized, which lowers recovery rates. Further, for example, in the case of over-reduction, it is conceivable to adjust the degree of reduction by blowing a gas such as oxygen to oxidize a molten material. However, this requires equipment to blow a gas into the molten material, and incurs costs.

Therefore, it is desired that the degree of reduction of an obtained alloy (metals) can be efficiently adjusted appropriately and economically in order to recover the valuable metals at high recovery rates, while effectively removing impurities in a melting treatment.

It should be noted that Patent Document 1 discloses a technology for recovering valuable metals in a recovery process of valuable metals including nickel and cobalt from discarded lithium ion batteries or the like at a high recovery rate, in which valuable metals can be recovered at high recovery rates by performing dephosphorylation without adversely affecting the recovery rates of the valuable metals. However, Patent Document 1 does not disclose adjustment of the degree of reduction of the alloy obtained. Citation List

### Patent Document

Patent Document 1: Japanese Unexamined Patent Application, Publication No. 2013-091826 WO 2020/104164 discloses a method for recovering valuable metals from waste lithium batteries.

### DISCLOSURE OF THE INVENTION

Problems to be Solved by the Invention

The present invention has been proposed in view of the above circumstances, and an object of the present invention is to provide a method for producing a valuable metal containing nickel and cobalt from a raw material comprising phosphorus, and oxides of nickel and cobalt such as a discarded lithium ion battery as described above, in which the degree of reduction of an alloy obtained through melting treatment can be appropriately and efficiently adjusted.

### Means for Solving the Problems

The present inventors have intensively studied to solve the above-mentioned problems. As a result, the inventors have found that, in a step of melting a raw material comprising phosphorus, and oxides of nickel and cobalt, such as a discarded lithium ion battery to obtain a melt, it is possible to appropriately and efficiently adjust the degree of reduction of the melt by adding the raw material comprising phosphorus, and oxides of nickel and cobalt, when the degree of reduction is checked on the basis of a cobalt recovery rate and is determined as being excessive, when the cobalt recovery rate is 98% or more, thereby arriving at completion of the present invention. The present invention is defined by the method of claim 1.

### Effects of the Invention

According to the present invention, the degree of reduction of the alloy obtained through the melting treatment can be appropriately and efficiently adjusted.

### BRIEF DESCRIPTION OF THE DRAWINGS

FIG. 1 is a process diagram showing an example of a flow of a production method of valuable metals;
FIG. 2 is a graph showing a relationship between a cobalt grade and a cobalt recovery rate in a slag;
FIG. 3 is a graph showing a relationship between an oxygen partial pressure and a cobalt recovery rate in a melt; and
FIG. 4 is a graph showing a relationship between a cobalt recovery rate and a phosphorus grade in a metal, and is used for explaining adjustment of a degree of reduction in melting treatment.

### PREFERRED MODE FOR CARRYING OUT THE INVENTION

Hereinafter, embodiments of the present invention (hereinafter referred to as "the present embodiment") will be described. The present invention is not limited to the following embodiments.

### <<1. Method of Producing Valuable Metals>>

The production method of valuable metals according to the present embodiment is a method of separating and recovering the valuable metals from a raw material comprising phosphorous and oxides of nickel and or cobalt. Therefore, the production method of valuable metals also can be rephrased as a recovery method of valuable metals. The method according to the present embodiment is a method mainly by a pyrometallurgical process, but may be composed of a pyrometallurgical process and a hydrometallurgical process.

Examples of the raw material include a raw material including a discarded lithium ion battery. The positive electrode material constituting the lithium ion battery includes an oxide of nickel and an oxide of cobalt. The term "discarded lithium ion battery" is a concept including not only a used lithium ion battery, but also a waste material in a production process of lithium ion batteries, such as a defective product generated in a production process of a positive electrode material or the like constituting the battery, a residual material in the production process, and waste generated. Therefore, the discarded lithium ion battery can also be referred to as a lithium ion battery waste material.

The "valuable metals" that can be recovered from a raw material containing oxides each including nickel or cobalt refers to at least nickel (Ni) and cobalt (Co). For example, when the raw material is a raw material including a discarded lithium ion battery, examples of the valuable metals include, in addition to nickel and cobalt, copper (Cu) and the like. The examples further include an alloy composed of a combination of nickel, cobalt, and copper. The content of each valuable metal contained in the discarded lithium ion battery is not particularly limited. For example, copper may be contained in an amount of 10% by mass or more.

Specifically, the method of producing valuable metals according to the present embodiment includes at least a melting step of subjecting a raw material comprising phosphorous and oxides of nickel and or cobalt to melting treatment to obtain a melt, and a slag separation step of separating a slag from the melt to recover an alloy containing the valuable metals. In this method, the degree of reduction in the melting treatment is determined based on the cobalt recovery rate in the melting step, and when it is determined that the degree of reduction is excessive, a raw material containing oxides each including nickel and cobalt is added as an oxidant. Here, the "cobalt recovery rate" refers to a ratio (percentage) of an amount of cobalt in the alloy produced by the treatment and recovered, with respect to an amount of cobalt in the raw material. The degree of reduction in the melting treatment is determined as being excessive when the cobalt recovery rate is 98% or more.

The cobalt recovery rate can be calculated based on an analysis result of, for example, a cobalt grade in the slag. Alternatively, the cobalt recovery rate can be calculated based on a measurement result of an oxygen partial pressure in the melt generated by melting the raw material.

As described above, in the method according to the present embodiment, the cobalt recovery rate is calculated from the slag or the alloy obtained by the melting treatment or a melt containing a slag of an alloy, and the degree of reduction is determined based on the cobalt recovery rate.

In this method, when it is determined that the degree of reduction, which can be determined based on the cobalt grade in the slag, is excessive, that is, when the melting step is determined as being over-reducing, an oxidant is added to adjust the degree of reduction. As the oxidant to be added at this time, a raw material comprising phosphorus, and oxides of nickel and cobalt, which is the raw material to be treated, is used. Specifically, for example, in a case where the melting treatment is performed using a raw material including a discarded lithium ion battery as a raw material, a raw material including a discarded lithium ion battery is used as the oxidant to be added when the melting step is determined as being over-reducing.

According to such a method, the degree of reduction can be appropriately grasped in the melting treatment, and the degree reduction can be adjusted by appropriately adding an oxidant based on the degree of reduction. Thereby, the valuable metals can be recovered at high recovery rates, and a metal having a content of impurities such as phosphorus effectively reduced can be obtained. Further, since a raw material comprising phosphorus, and oxides of nickel and cobalt (for example, a raw material containing a discarded lithium ion battery) is added as the oxidant to be added at the time of adjusting the degree of reduction, not only the degree of reduction can be adjusted effectively, but also amounts of metals to be recovered can be increased because the oxidant is an oxidant containing valuable metals to be recovered.

Hereinafter, a method of producing valuable metals will be described more specifically by giving an example of a case where a raw material including a discarded lithium ion battery is used as a raw material comprising phosphorus, and oxides of nickel and cobalt.

### <<2. Regarding Each Step of Production Method>>

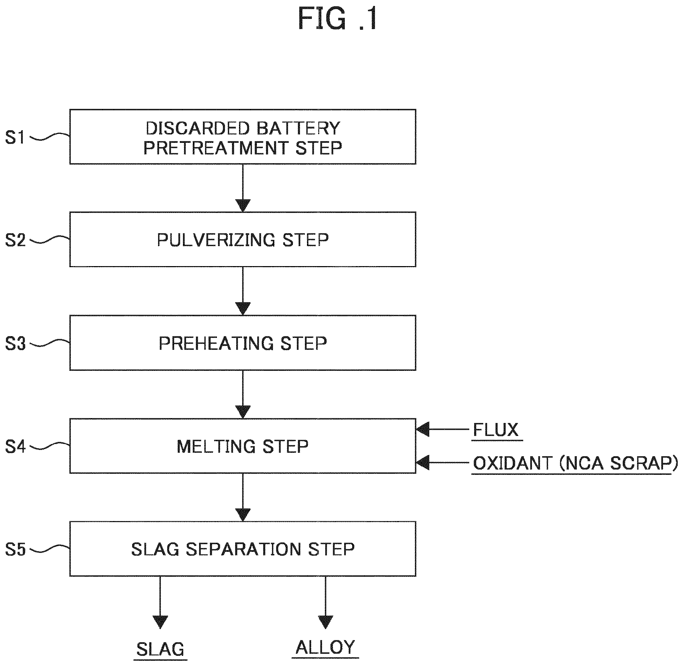

FIG. 1 is a process diagram showing an example of a flow of a production method of valuable metals according to the present embodiment. As shown in FIG. 1, the method of producing valuable metals is a method of producing valuable metals from a raw material including a discarded lithium ion battery, and includes: a discarded battery pretreatment step S1 of removing an electrolytic solution and an outer case of the discarded lithium ion battery; a pulverizing step S2 of pulverizing the contents of the battery to produce a pulverized product; a preheating step (also referred to as "oxidative roasting step") S3 of preheating the pulverized product as necessary; and a melting step (also referred to as "reductive melting step") S4 of melting the pulverized product to produce a melt, and a slag separation step S5 of separating a slag from the melt and recovering an alloy including valuable metals.

### [Discarded Battery Pretreatment Step]

The discarded battery pretreatment step S1 is performed for a purpose of preventing explosion of the discarded lithium ion battery or making the discarded lithium ion battery harmless, by removing the outer case or the like when recovering the valuable metals from the discarded lithium ion battery.

That is, for example, a discarded lithium ion battery such as a used lithium ion battery is a closed system and has an electrolytic solution or the like therein and, therefore, if the pulverizing treatment is carried out as is, there is a risk of explosion, which is dangerous. Therefore, it is necessary to perform a discharge treatment or a treatment for removing the electrolytic solution by some means. In this way, by removing the electrolytic solution and the outer case in the waste battery pretreatment step S1, safety can be enhanced and recovery productivity of valuable metals such as copper, nickel, and cobalt can be increased.

Although the specific method of the pretreatment is not particularly limited, for example, by physically piercing the battery with a needle-shaped cutting edge, the electrolytic solution inside can be poured out and removed. Alternatively, the discarded lithium ion battery may be heated as is to burn the electrolytic solution, thereby making it harmless.

The outer case constituting the battery is often made of metal aluminum, iron, or the like, and by performing such pretreatment, the metallic outer case can be relatively easily recovered as a valuable metal as is. For example, in the case of collecting aluminum or iron contained in the outer case, sieving can be performed using a sieve shaker after pulverizing the removed outer case. In the case of aluminum, even if it is lightly pulverized, it becomes powder easily and can be efficiently recovered. Further, iron contained in the outer case can be recovered by sorting using magnetic force.

### [Pulverizing Step]

In the pulverizing step S2, the contents of the battery obtained through the discarded battery pretreatment step S1 are pulverized to produce a pulverized product. The treatment in the pulverizing step S2 is carried out for the purpose of increasing reaction efficiency in the subsequent or later pyrometallurgical process, which enables the recovery rate of valuable metals such as copper, nickel and cobalt to be increased.

The pulverizing method is not particularly limited, but the contents of the battery can be pulverized using a conventionally known pulverizer such as a cutter mixer.

### [Preheating Step]

The pulverized product of the discarded lithium ion battery subjected to the pulverizing step S2 can be subjected to a heating treatment (oxidative roasting treatment) by providing a preheating step S3 if necessary. By performing the heating treatment in the preheating step S3, impurities contained in the contents of the battery are made to evaporate or thermally decompose and to be removed.

In the preheating step S3, for example, it is preferable to perform heating at a temperature of 700°C or higher (preheating temperature). By setting the preheating temperature to 700°C or higher, the efficiency of removing impurities contained in the battery can be increased. On the other hand, the upper limit of the preheating temperature is preferably 900°C or lower, whereby the thermal energy cost can be suppressed and the treatment efficiency can be increased.

The heating treatment is preferably performed in the presence of an oxidant. Thereby, carbon among the impurities contained in the contents of the battery can be oxidatively removed, and aluminum also can be oxidized. In particular, by oxidatively removing carbon, molten fine particles of the valuable metal locally generated in the subsequent melting step S4 can be aggregated without physical obstacles due to carbon, so that the alloy obtained as the melt can be integrated and easily recovered. Generally, the main elements constituting the discarded lithium ion battery are likely to be oxidized in the order of aluminum > lithium > carbon > manganese > phosphorus > iron > cobalt > nickel > copper due to difference in affinity with oxygen.

The oxidant is not particularly limited, but a gas containing oxygen such as air, pure oxygen, or an oxygen-enriched gas is preferably used from the viewpoint of easy handling. The amount of the oxidant to be introduced may be, for example, about 1.2 times the chemical equivalent required for oxidation of each substance to be oxidized.

### [Melting Step]

In the melting step (reductive melting step) S4, the pulverized product of the discarded lithium ion battery is melted together with a flux and a melt composed of an alloy containing valuable metals and a slag is obtained. Thus, impurity elements such as aluminum come to be contained in the slag as an oxide, and phosphorus is also incorporated in the flux and comes to be contained in the slag. On the other hand, a valuable metal such as copper, which hardly forms an oxide, melts and can be recovered from the melt as an integrated alloy.

The flux preferably contains an element which incorporates an impurity element and forms a basic oxide having a low melting point. Above all, the flux more preferably contains a calcium compound from the viewpoint of being inexpensive and stable at room temperature. Phosphorus, which is an impurity element, becomes an acid oxide when oxidized, and is more easily taken into the slag with a more basic slag formed by the melting treatment.

As the calcium compound, for example, calcium oxide or calcium carbonate may be added. As the amount of calcium to be added, since an Al₂O₃-CaO-Li₂O system is used as a slag system, it is preferable to add an appropriate amount which is sufficient for calcium to form an eutectic substance with alumina in the sample to melt the alumina, i.e., an amount giving CaO/(Al₂O₃ + CaO)=0.15 or more in weight ratio.

The melting step S4 may be performed in the presence of an oxidant or a reductant in order to appropriately adjust the oxidation-degree of reduction when melting the discarded lithium ion battery.

As the oxidant, a known oxidant can be used, and a solid oxidant may be added, or a gaseous oxidant may be introduced into the furnace. As the reductant, a known reductant can be used, but a reductant containing a carbon atom is preferable. By adding a reductant containing a carbon atom to the discarded lithium ion battery, an oxide of a valuable metal, such as copper, nickel, or cobalt, contained in the discarded lithium ion battery, can be easily reduced.

Specifically, examples of the reductant containing a carbon atom include graphite capable of reducing 2 mol of an oxide of a valuable metal such as copper oxide or nickel oxide by 1 mol of carbon. Further, hydrocarbons capable of reducing 2 mol to 4 mol of valuable metal oxide per 1 mol, carbon monoxide capable of reducing 1 mol of a valuable metal oxide per 1 mol, or the like can be added as a carbon supply source. Thus, by performing reduction melting treatment in the presence of carbon as a reductant, it is possible to efficiently reduce a valuable metal and more effectively obtain an alloy containing the valuable metal. Further, reduction treatment using carbon has the advantage of extremely high safety as compared with a case of using thermite reaction, in which reduction is performed using metal powder, for example, aluminum, as a reductant.

When carbon is added as a reductant, an excessive amount of carbon may be added. In a case where a compound of phosphorus is contained in the discarded lithium ion battery, addition of too large amount of carbon may also reduce phosphorus, and the phosphorus may be incorporated in an alloy phase. However, by melting the discarded lithium ion battery in the presence of a flux while adding an oxidant where necessary, the phosphorus may be incorporated into the flux and can be removed.

When heating in the melting treatment, the flowability of the melt is low at a stage where the heating temperature has been reached and some of the discarded lithium ion batteries have not been completely melted. It is, therefore, necessary to maintain the heating temperature for at least 30 minutes, for example. Note that it is preferable to observe the inside of the crucible and ultimately confirm with a measuring rod whether or not the raw material has been completely molten. A molten alloy and a slag having increased fluidity after melting are separated from each other as the metal in the lower layer and the slag in the upper layer in the crucible by their specific gravities. At this time, after the slag of the supernatant is also collected using a measuring rod, cooling and pulverizing treatment are performed.

Here, in the production method of valuable metals according to the present embodiment, the degree of reduction in the melting treatment is determined based on a cobalt recovery rate, that is, a ratio of a cobalt amount in the alloy produced and collected by the treatment with respect to a cobalt amount in the raw material. When the cobalt recovery rate is 98% or more, the degree of reduction in the melting treatment is determined as excessive.

### (First Embodiment relating to Calculation of Cobalt Recovery Rate)

As a first embodiment, the cobalt recovery rate can be calculated based on an analysis result of a cobalt grade in the slag generated.

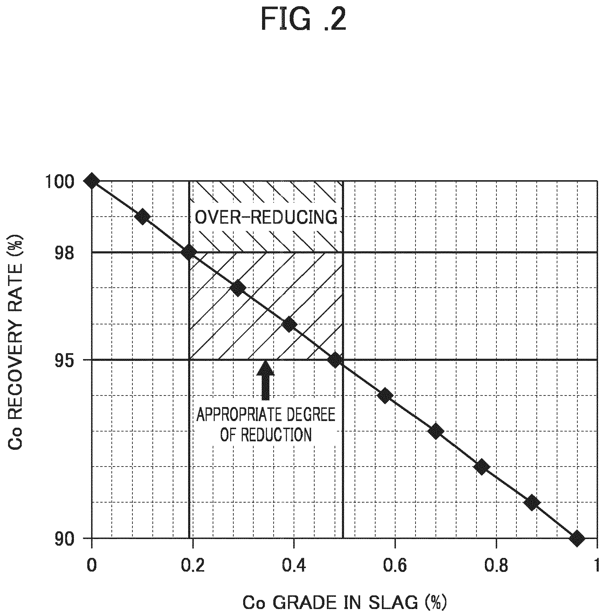

FIG. 2 is a graph showing a relationship between a cobalt grade and a cobalt recovery rate in a slag. As shown in the graph of FIG. **2****,** a proportional relationship is present between the cobalt grade in a slag and the cobalt recovery rate. Since an amount of flux, for example, calcium, to be added is determined as an appropriate amount for melting, relative to the composition of a discarded lithium ion battery as the raw material, an amount of slag to be generated is determined once the composition of the discarded lithium ion battery as the raw material is determined, and the slope and intercept of the proportional relationship are also determined. Therefore, based on such a proportional relationship, the cobalt recovery rate can be effectively calculated from the analysis result of the cobalt grade in the slag.

In this manner, by using the slag produced by the melting treatment, the cobalt grade in the slag is quickly analyzed (for example, within 8 minutes) by an analyzer such as an X-ray fluorescence spectrometer. Thereby, the cobalt recovery rate can be calculated.

Alternatively, the cobalt recovery rate can be calculated by obtaining an amount of cobalt in the metal from an amount of cobalt in the discarded lithium ion battery charged and an amount of cobalt in the slag, which is obtained from the cobalt grade of the slag generated by the melting treatment and the amount of the slag generated. It should be noted that the slag amount is obtained, assuming that nickel, cobalt, and copper are all distributed to metal and remaining elements, the amount of which is obtained by subtracting an amount of nickel, cobalt, and copper from an amount of discarded lithium ion batteries charged, are oxidized into oxides and flux is added to the slag amount as calcium oxide.

### (Second Embodiment relating to Calculation of Cobalt Recovery Rate)

As a second embodiment, the cobalt recovery rate can be calculated based on a measurement result of oxygen partial pressure of the melt (molten body) produced by the melting treatment.

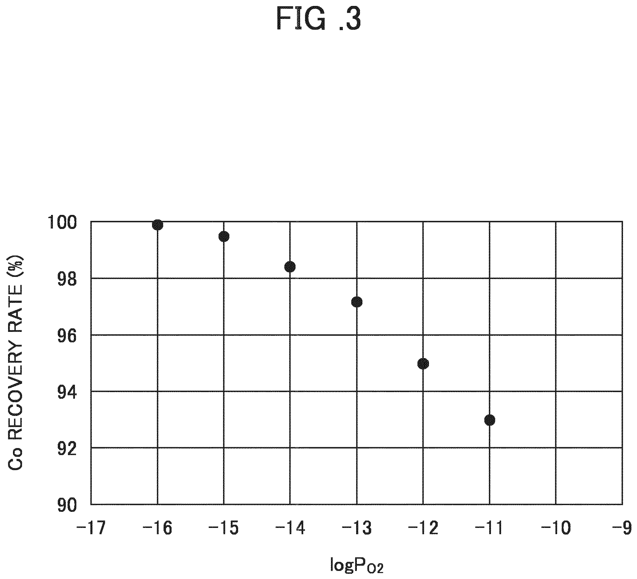

FIG. 3 is a graph showing a relationship between oxygen partial pressure and cobalt recovery rate in a melt. As a result of research by the present inventors, it has been found that there is a one-to-one corresponding relationship between the oxygen partial pressure in the melt and the cobalt recovery rate as shown in FIG. 3, and it has been found that the cobalt recovery rate corresponding to the oxygen partial pressure can be obtained by measuring the oxygen partial pressure in the melt.

The method of measuring the partial pressure of oxygen in the melt is not particularly limited as long as it can directly measure the partial pressure of oxygen in the melt. For example, a method of using an oxygen analyzer provided in an oxygen sensor (oxygen probe), and inserting the sensor in the melt so that the tip of the oxygen sensor is immersed in the melt and measuring. As the oxygen sensor, a well-known sensor such as a zirconia solid electrolyte sensor can be used.

For example, referring to FIG. 3, when the oxygen partial pressure in the melt is 10⁻¹⁴ atm or less, the cobalt recovery rate exceeds 98%, and when the oxygen partial pressure in the melt is 10⁻¹² atm or more, the cobalt recovery rate is less than 95%.

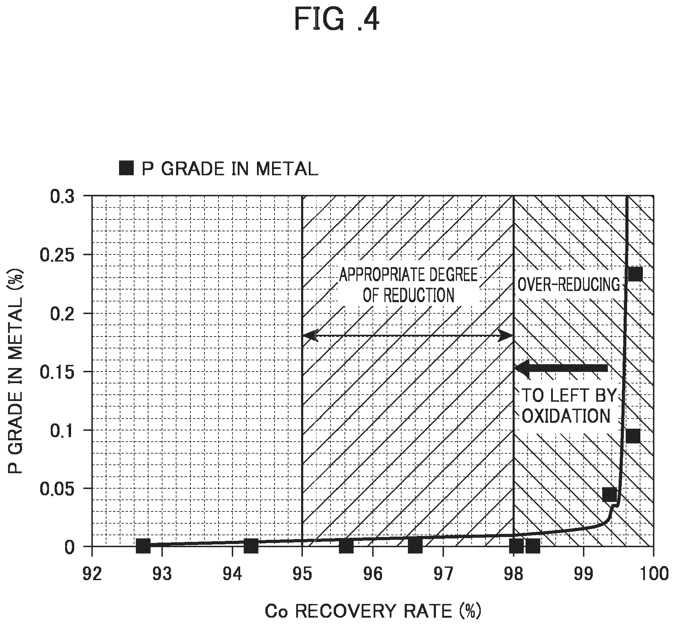

From this, by adjusting the degree of reduction based on the cobalt recovery rate so that the oxygen partial pressure is controlled to be in a range in which the oxygen partial pressure in the melt is greater than 10⁻¹² atm and less than 10⁻¹⁴ atm, it is possible to effectively and efficiently remove phosphorus while recovering cobalt at a high recovery rate, and to recover a high grade alloy with a decreased phosphorus content, as shown in the relationship shown in FIG. 4, which will be described later. By controlling the partial pressure of oxygen in the melt based on the above-described relationship, a desired metal can be effectively obtained.

### (Determination and Control of Degree of Reduction based on Calculated Cobalt Recovery Rate)

As described above, after the cobalt recovery rate is calculated based on the measurement result of the cobalt grade in the slag and the measurement result of the oxygen partial pressure of the melt, the degree of reduction in the melting treatment is determined based on the cobalt recovery rate. Specifically, the degree of reduction is determined, for example, by checking whether or not the cobalt recovery rate is in the range of 95% or more and 98% or less.

As a result of research by the present inventors, it was found that there is a relationship between the cobalt recovery rate from a raw material including a discarded lithium ion battery and the grade of phosphorus (P), an impurity contained in the recovered alloy (metal). Specifically, FIG. 4 is a graph showing a relationship between the cobalt recovery rate and the phosphorus grade in the metal (alloy). As shown in the graph of FIG. **4****,** it is understood that when the cobalt recovery rate exceeds 98%, the phosphorus grade in the metal recovered rapidly increases. The recovery rate of cobalt, which is a valuable metal, is preferably 95% or more.

From this, it can be understood that by confirming whether or not the calculated cobalt recovery rate is in the range of 95% or more and 98% or less, and confirming that the cobalt recovery rate is in the range and terminating the melting treatment, the phosphorus content in the alloy (metal) to be recovered thereafter can be made 0.1% by mass or less. It is thereby possible to effectively and efficiently remove phosphorus while recovering cobalt at a high recovery rate without providing a step of performing a separate dephosphorylation treatment after recovering the alloy, which enables recovery of a high-grade alloy with a reduced phosphorus content.

On the other hand, when the calculated cobalt recovery rate is 98% or more, it is determined that the degree of reduction in the melting treatment is excessive, **i.e.,** over-reducing. In a case where the cobalt recovery rate is 98% or more, the distribution ratio of impurities such as phosphorus to the metal also increases.

In the method according to the present embodiment, it is important to determine the degree of reduction in the melting treatment based on the obtained cobalt recovery rate. For example, when the calculated cobalt recovery rate is 98% or more, it is determined that the degree of reduction is excessive, and the degree of reduction in the melting treatment can be appropriately adjusted based on the determination.

Specifically, even if the calculated cobalt recovery rate is outside the range of 95% or more and 98% or less, or even if the calculated cobalt recovery rate is in the range of 95% or more and 98% or less, when a deviation occurs from a predetermined target value, an oxidant is added if the cobalt grade in the slag is low, as necessary, whereby a part of cobalt in the metal is distributed to the slag, but phosphorus in the metal can be distributed to the slag. Conversely, when the cobalt grade in the slag is high, by adding a reductant, it is possible to cause cobalt to be distributed to the metal and increase the recovery rate, though some of phosphorus in the slag is distributed to the metal.

In this way, it is possible to effectively determine whether or not the degree of reduction is appropriate from the cobalt recovery rate, and it is possible to control the melting treatment by adding an oxidant and a reductant as necessary.

Here, when the calculated cobalt recovery rate is 98% or more, the degree of reduction is excessive, that is, the resultant metal is over-reduced, and the phosphorus content in the metal comes to increase. Therefore, it is necessary to adjust the degree of reduction by adding an oxidant. At this time, in the method according to the present embodiment, a raw material containing oxides each including nickel or cobalt is used as the oxidant. Specifically, as the raw material containing oxides each including nickel or cobalt, a raw material containing a discarded lithium ion battery is used as the oxidant.

The degree of reduction can thereby be appropriately adjusted and impurities such as phosphorus in the metal can be effectively oxidized and removed into the slag. At the same time, nickel and cobalt in the raw material (raw material including a discarded lithium ion battery) used as the oxidant can be reduced into a metal form and recovered.

In general, an excessive amount of carbon is added in the melting treatment as described above, and thus the frequency of addition of an oxidant increases when adjusting the degree of reduction. At this time, by using a raw material comprising phosphorus, and oxides of nickel and cobalt as the oxidant, it is possible to appropriately adjust the degree of reduction, and it is also possible to recover nickel and cobalt contained in the oxidant, whereby it is possible to increase the amount of metal recovered.

As an amount of the oxidant to be used in the adjustment of the degree of reduction, it is sufficient to predict a phosphorus grade in the metal based on the cobalt recovery rate calculated from the cobalt grade in the slag, set the amount of the oxidant to an amount required for oxidizing the whole amount of the phosphorus contained in the metal, and charge the oxidant in the amount.

Specifically, for example, when an amount of metal is 100 g and the phosphorus grade is estimated to be 0.2% by mass, an amount of phosphorus in the metal is 0.2 g. Assuming that the oxidant is Ni₂O₃ and the oxidation efficiency is 100%, the reaction formula of P + 5/6Ni₂O₃=1/2P₂O₅ + 5/3Ni is satisfied, so that an addition amount of the oxidant Ni₂O₃ is 0.89 g. When the oxidant is Co₂O₃ and the oxidation efficiency is 100%, since the reaction formula of P + 5/6Co₂O₃=1/2P₂O₅ + 5/3Co is satisfied, an addition amount of the oxidant Co₂O₃ is 0.89 g. Although the addition amount exemplified is an amount when the reaction efficiency is assumed to be 100%, cobalt oxidation also occurs in the metal. It is, therefore, preferable to set the actual addition amount, by assuming that the reaction efficiency of 2P + 5/2O₂→P₂O₅ with respect to phosphorus in the metal is 30% or more and 90% or less, and the retention time is 5 minutes or more and 30 minutes or less. With regard to the addition amount of the reductant, it is preferable to obtain, by assuming that the reaction efficiency of 2CoO + C→2Co + CO₂ is 30% or more and 70% or less, because there is a reduction reaction of phosphorus in the slag when a reductant containing a carbon atom is used.

As described above, as the oxidant to be used for adjusting the degree of reduction, a raw material comprising phosphorus, and oxides of nickel and cobalt, that is, a raw material including a discarded lithium ion battery, is used. In this case, an oxide obtained by oxidatively roasting a discarded lithium ion battery at 700°C to 900°C (oxide derived from a discarded lithium ion battery) is used. It should be noted that the oxide derived from a discarded lithium ion battery includes Ni₂O₃ in a content of 0% or more and 85% or less and Co₂O₃ in a content of 0% or more and 85% or less. Practically, it is preferable to set the addition amount of the oxide from analysis data of Ni₂O₃ and Co₂O₃ contained in the oxide.

As the oxidant, not a discarded lithium ion battery but rather a positive electrode material (for example, NCA (nickel-cobalt-aluminum-based lithium ion battery) scrap) obtained by sorting discarded lithium ion batteries can be used. The positive electrode material contains 0% or more and 85% or less of Ni₂O₃ and 0% or more and 85% or less of Co₂O₃. In this case, amounts of impurities such as aluminum and phosphorus mixed from a raw material other than the positive electrode material can be suppressed, which is preferable.

It should be noted that the adjustment of the degree of reduction is not limited to adjustment using an oxidant as described above, and addition of a reductant in combination is not prevented. Specifically, as the reductant, a material with high carbon grade (graphite powder, graphite particles, coal, coke, or the like) or carbon monoxide can be used for the adjustment. As the reductant, a component having a high carbon grade among raw materials also can be used.

The heating temperature (melting temperature) in the melting treatment is not particularly limited, but is preferably 1300°C or higher, and more preferably 1350°C or higher. By melting at a temperature of 1300°C or higher, valuable metals such as copper, cobalt, and nickel are efficiently melted, and an alloy is formed in a state where fluidity is sufficiently enhanced. Therefore, the separation efficiency of the valuable metals and the impurity components in the slag separation step S5 described later can be improved. When the heating temperature is lower than 1300°C, the separation efficiency between the valuable metals and the impurity components may be insufficient.

The upper limit of the heating temperature in the melting treatment is preferably 1600°C or lower. When the heating temperature exceeds 1600°C, there is a possibility that thermal energy is wastefully consumed, and refractory materials such as the crucible and furnace wall consume too much, resulting in a decrease in productivity.

In the melting treatment, dust, exhaust gas, or the like may be generated, but they can be made harmless by performing a conventionally known exhaust gas treatment.

### [Slag Separation Step]

In the slag separation step S5, a molten material obtained in the melting step S4 is solidified, then a slag is separated from the solidified melt, and an alloy containing valuable metals is recovered. Since the slag and the alloy contained in the solidified melt are separated by the difference in the specific gravities, both the slag and the alloy can be recovered.

Here, the treatment in the metallurgical process when each valuable metal is produced from an alloy containing valuable metals can be carried out by a well-known method such as neutralization treatment or solvent extraction treatment, and is not particularly limited. As an example, in the case of an alloy composed of cobalt, nickel, and copper, valuable metals may be leached with an acid such as sulfuric acid (leaching step); then, for example, copper may be extracted (extraction step) by solvent extraction or the like; and the remaining solution of nickel and cobalt may be supplied to a positive electrode active material production process or the like and may be used in the battery production process.

In the method according to the present embodiment, as described above, in the melting step S4, the degree of reduction in the melting treatment is confirmed based on the ratio (cobalt recovery rate) of the cobalt amount in the alloy generated with respect to the cobalt amount in the raw material. Then, for example, once it is confirmed that the calculated cobalt recovery rate is 95% or more and 98% or less, the melting pretreatment is terminated, and thereafter, an alloy (metal) is recovered by separating from the slag in the slag separation step S5. Thereby, it is possible to recover an alloy in which the phosphorus content is effectively reduced, specifically, an alloy in which the phosphorus content is 0.1% by mass or less.

On the other hand, when it is determined based on the cobalt grade in the slag that the melting treatment is over-reducing, for example, when it is determined that the cobalt recovery rate calculated from the cobalt grade is 98% or more and over-reducing has occurred, a raw material comprising phosphorus, and oxides of nickel and cobalt (raw material including a discarded lithium ion battery) is added as the oxidant, to adjust the degree of reduction.

The cobalt recovery rate can be calculated based on the analysis result of the cobalt grade in the slag. The cobalt recovery rate can also be calculated based on the measurement result of the oxygen partial pressure in the melt generated by the melting treatment.

According to the method according to the present embodiment, in the step of melting a discarded lithium ion battery, an alloy containing valuable metals from which phosphorus has been removed can be efficiently obtained, and the metallurgical process of the respective valuable metals from the alloy containing the valuable metals can be simplified. That is, it is not necessary to provide a step of performing a dephosphorylation treatment on the obtained alloy containing the valuable metals. In addition, since a raw material is used as the oxidant to be added when the degree of reduction is excessive, the valuable metals contained in the raw material can also be recovered. That is, the valuable metal can be recovered with higher efficiency.

### EXAMPLES

Hereinafter, Examples of the present invention will be described in more detail; however, the present invention is not limited to the following Examples.

### [Recovery Treatment of Valuable Metals]

### (Discarded Battery Pretreatment Step)

First, as the discarded lithium ion batteries, 18650 cylindrical batteries, used square batteries for vehicle use, and defective products collected in the battery production process were prepared. Then, the discarded lithium ion batteries were collectively immersed in salt water and discharged, then moisture was blown off, and the batteries were roasted in the atmosphere at a temperature of 260°C to decompose and remove the electrolytic solution and the outer cases, whereby battery contents were obtained. The main element compositions of the battery contents are as shown in Table 1 below.

**[Table 1]**

| Main element composition of battery contents(% by mass) | | | | | |
|---|---|---|---|---|---|
| Copper | Nickel | Cobalt | Phosphorus | Aluminum | Carbon |
| 31 | 5 | 5 | 0.5 | 15 | 25 |

### (Pulverizing Step)

Next, the battery contents were pulverized by a pulverizer (Good Cutter, manufactured by Ujiie Manufacturing Co., Ltd.) to obtain a pulverized product.

### (Preheating Step)

Next, the obtained pulverized product was charged into a rotary kiln and preheated in the atmosphere at a preheating temperature of 800°C for 180 minutes.

### (Melting Step)

The resulting oxides of the discarded lithium ion batteries were melted under the conditions shown in Table 2 below. Then, the cobalt recovery rate was estimated to be 99.9% from the cobalt grade, 0.01% by mass, in the slag obtained in the first run, and the phosphorus grade in the metal was estimated to be 0.6% by mass from the estimated cobalt recovery rate.

Further, the oxygen partial pressure in the melt at this time was measured. As a result, the measurement value of the oxygen partial pressure was 10⁻¹⁵ atm, and the cobalt recovery rate of 99.9% also could be estimated from the result of the oxygen partial pressure. In the measurement of the oxygen partial pressure, an oxygen analyzer equipped with an oxygen probe (OXT-O, manufactured by Kawaso Electric Industrial Co., Ltd.) at the tip thereof was used. The probe was inserted so that the tip of the oxygen probe was directly immersed in the melt, and the measurement value was read after waiting for the measurement value to settle. The oxygen probe was equipped with a zirconia solid electrolyte sensor.

From the estimated phosphorus grade in the metal, 0.89 g of Ni₂O₃ and 0.89 g of Co₂O₃ as the oxidants are required for every 0.2% by mass of phosphorus grade per 100 g of the metal. Thus, considering an amount of Ni₂O₃ contained in oxides derived from NCA (nickel-cobalt-aluminum-based lithium ion battery) scrap is 77% by mass and the amount of Co₂O₃ is 8% by mass with respect to 2,120 g of metal, when the oxidation efficiency of phosphorus is assumed to be 100%, the amount of oxides derived from the NCA scrap required is 66.6 g. Here, when adjusting the actual degree of reduction, in order to reliably remove phosphorus in consideration of oxidation efficiency, the degree of reduction was adjusted by adding the oxide derived from NCA scrap of 160 g, which was 2.4 times the theoretical amount, that is, the reaction efficiency was assumed to be 42%.

### (Slag Separation Step)

After the melting treatment, the melt was cast into a mold by utilizing the difference in the specific gravity. The melt was solidified to be divided into the metal and the slag, then the slag was separated from the solidified melt, and the alloy was recovered.

After the alloy had been recovered, the slag was subjected to elemental analysis using an ICP analyzer (Agilent 5100 SUDV manufactured by Agilent Technology Co., Ltd.), and the amounts of cobalt and phosphorus were determined as a ratio (mass %) with respect to the total mass of the slag.

After the slag had been separated, the alloy was also subjected to the elemental analysis using the ICP analyzer (Agilent 5100 SUDV manufactured by Agilent Technology Co., Ltd.), and the amounts of cobalt and phosphorus were measured to determine the recovery rate of cobalt from the batteries and the phosphorus grade in the alloy.

### [Results]

Table 2 below shows measurement results of the recovery rate of cobalt from the discarded lithium ion batteries with respect to the total mass of the slag and the phosphorus grade in the alloy.

**[Table 2]**

| Melting temperature | Raw material charged | Amount of charged material | | | Assumed amount of melt* | | Slag Co grade | Oxygen partial pressure in melt | Co recover y rate | P grade | Heating time | Retention time | Sampling timing |
|---|---|---|---|---|---|---|---|---|---|---|---|---|---|
| | | Discarded LIB | NCA scrap | CaO | Metal amount | Slag amount | | | | | | | |
| (°C) | | (g) | (g) | (g) | (g) | (g) | (% by mass) | (atm) | (%) | (% by mass) | (h) | (h) | |
| 1500 | First run | 4744 | 0 | 292 | 2120 | 2680 | 0.01 | 10⁻¹⁵ | 99.9 | 0.6 | 3 | 1 | First charge and retention completed |
| | Second run (as oxidant) | 0 | 160 | 0 | 2172 | 2788 | 0.35 | 10^{-12.8} | 96.4 | <0.01 | 0.1 | 0.4 | Second charge and retention completed |

| | | | | | | | | | | | | | |
|---|---|---|---|---|---|---|---|---|---|---|---|---|---|
| * The assumed amount of melt refers to weight of the melt on the assumption that the whole amount of Ni, Co, and Cu has been reduced and the whole amount of elements other than them has been oxidized. * Co recovery rate and phosphorus grade in the metal in the first run are estimated values from XRF analysis results of cobalt in the slag. * Co recovery rate and phosphorus grade in the metal in the second run are ICP chemical analysis values. | | | | | | | | | | | | | |

As can be seen from the results shown in Table 2, the alloy obtained in the Examples exhibited good results in that the recovery rate of cobalt, which is a valuable metal contained in the batteries, was 95% or more and the phosphorus grade in the obtained alloy was 0.01% by mass or less. In other words, based on the cobalt recovery rate calculated from the result of the cobalt grade in the slag of the discarded lithium ion batteries in a molten state, the degree of reduction during reductive melting could be appropriately adjusted, and the target metal could be obtained.

When the oxygen partial pressure was 10⁻¹⁵ atm, the cobalt recovery rate was 99.9%, and when the oxygen partial pressure was 10^{-12.8} atm, the cobalt recovery rate was 96.4%, indicating that the oxygen partial pressure and the cobalt recovery rate were related to each other. In addition, this result was consistent with the graph shown in FIG. 3. Therefore, it was clarified that the cobalt recovery rate could be determined based on the oxygen partial pressure of the melt, and the target metal could be obtained based on the cobalt recovery rate. From these results, it was found that the target metal could be obtained by controlling the oxygen partial pressure.

At this time, since NCA scrap was used as the oxidant used for adjusting the degree of reduction, the amount of metal recovered also could be increased.

## Claims

1. A method of producing valuable metals from a raw material comprising phosphorous and oxides of nickel and cobalt, the method comprising:
a melting step of subjecting the raw material to a melting treatment to obtain a melt; and
a slag separation step of separating a slag from the melt to recover an alloy comprising the valuable metals,
wherein, in the melting step, a degree of reduction in the melting treatment is determined based on a mass percentage rate, which is the cobalt recovery rate, of a cobalt amount in the alloy generated, with respect to a cobalt amount in the raw material, and
when the degree of reduction is determined as being excessive, the raw material is added as an oxidant;
wherein the degree of reduction in the melting treatment is determined as being excessive when the cobalt recovery rate is 98% or more.

2. The method of producing valuable metals according to claim 1, wherein, in the melting step, the cobalt recovery rate is calculated based on an analysis result of a cobalt grade in the slag.

3. The method of producing valuable metals according to claim 1, wherein, in the melting step, the cobalt recovery rate is calculated based on a measurement result of an oxygen partial pressure in the melt generated by the melting treatment.

4. The method of producing valuable metals according to any one of claims 1 to 3, wherein the raw material is a raw material comprising a discarded lithium ion battery.

5. The method of producing valuable metals according to any one claims 1 to 4, wherein the phosphorus content of the alloy recovered through the slag separation step is 0.1% by mass or less.

6. The method of producing valuable metals according to any one of claims 1 to 5, wherein, in the melting step, the raw material is melted at a heating temperature of 1300°C or higher and 1600°C or less.

## Patentansprüche

1. Verfahren zur Herstellung von Wertmetallen aus einem Rohmaterial, das Phosphor und Nickel- und Cobaltoxide umfasst, wobei das Verfahren Folgendes umfasst:
einen Schmelzschritt, bei dem das Rohmaterial einer Schmelzbehandlung unterzogen wird, um eine Schmelze zu erhalten; und
einen Schlackentrennschritt, bei dem eine Schlacke von der Schmelze getrennt wird, um eine Legierung zu gewinnen, die die Wertmetalle umfasst,
wobei im Schmelzschritt ein Reduktionsgrad in der Schmelzbehandlung auf Grundlage eines Massenprozentanteils bestimmt wird, der der Cobaltgewinnungsanteil einer Cobaltmenge in der erzeugten Legierung in Bezug auf eine Cobaltmenge im Rohmaterial ist, und
wenn bestimmt wird, dass der Reduktionsgrad übermäßig ist, das Rohmaterial als Oxidationsmittel hinzugefügt wird;
wobei bestimmt wird, dass der Reduktionsgrad in der Schmelzbehandlung übermäßig ist, wenn der Cobaltgewinnungsanteil 98 % oder mehr beträgt.

2. Verfahren zur Herstellung von Wertmetallen nach Anspruch 1, wobei im Schmelzschritt der Cobaltgewinnungsanteil auf Grundlage eines Analyseergebnisses eines Cobaltgehalts in der Schlacke berechnet wird.

3. Verfahren zur Herstellung von Wertmetallen nach Anspruch 1, wobei im Schmelzschritt der Cobaltgewinnungsanteil auf Grundlage eines Messungsergebnisses eines Sauerstoffteildrucks in der durch die Schmelzbehandlung erzeugten Schmelze berechnet wird.

4. Verfahren zur Herstellung von Wertmetallen nach einem der Ansprüche 1 bis 3, wobei das Rohmaterial ein Rohmaterial ist, das eine ausrangierte Lithium-Ionen-Batterie umfasst.

5. Verfahren zur Herstellung von Wertmetallen nach einem der Ansprüche 1 bis 4, wobei der Phosphorgehalt der über den Schlackentrennschritt gewonnenen Legierung 0,1 Masse-% oder weniger beträgt.

6. Verfahren zur Herstellung von Wertmetallen nach einem der Ansprüche 1 bis 5, wobei im Schmelzschritt das Rohmaterial bei einer Heiztemperatur von 1300 °C oder höher und 1600 °C oder weniger geschmolzen wird.

## Revendications

1. Procédé de production de métaux de valeur à partir d'une matière première comprenant du phosphore et des oxydes de nickel et de cobalt, le procédé comprenant :
une étape de fusion consistant à soumettre la matière première à un traitement de fusion pour obtenir une masse fondue ; et
une étape de séparation de laitier consistant à séparer un laitier de la masse fondue pour récupérer un alliage comprenant les métaux de valeur,
dans lequel, lors de l'étape de fusion, un degré de réduction dans le traitement de fusion est déterminé sur la base d'un taux de pourcentage en masse, qui est le taux de récupération du cobalt, d'une quantité de cobalt dans l'alliage généré, par rapport à une quantité de cobalt dans la matière première, et
lorsque le degré de réduction est déterminé comme étant excessif, la matière première est ajoutée en tant qu'oxydant ;
dans lequel le degré de réduction dans le traitement de fusion est déterminé comme étant excessif lorsque le taux de récupération du cobalt est de 98 % ou plus.

2. Procédé de production de métaux de valeur selon la revendication 1, dans lequel, lors de l'étape de fusion, le taux de récupération du cobalt est calculé sur la base d'un résultat d'analyse d'une qualité du cobalt dans le laitier.

3. Procédé de production de métaux de valeur selon la revendication 1, dans lequel, lors de l'étape de fusion, le taux de récupération du cobalt est calculé sur la base d'un résultat de mesure d'une pression partielle d'oxygène dans la masse fondue générée par le traitement de fusion.

4. Procédé de production de métaux de valeur selon l'une quelconque des revendications 1 à 3, dans lequel la matière première est une matière première comprenant une batterie lithium-ion mise au rebut.

5. Procédé de production de métaux de valeur selon l'une quelconque des revendications 1 à 4, dans lequel la teneur en phosphore de l'alliage récupéré par le biais de l'étape de séparation de laitier est de 0,1 % en masse ou moins.

6. Procédé de production de métaux de valeur selon l'une quelconque des revendications 1 à 5, dans lequel, lors de l'étape de fusion, la matière première est fondue à une température de chauffage de 1 300 °C ou plus et 1 600 °C ou moins.
